# EUROPEAN PATENT APPLICATION

(11) **EP 1 128 503 A2**
(43) Date of publication of application: **29.08.2001**
(21) Application number: 00311477.4
(22) Date of filing: 20.12.2000
(51) Int. Cl.: H01S 3/067

(54) **Optical amplifier stage**

(30) Priority: 28.02.2000 US 514133
(71) Applicant: Nortel Networks Limited, Montreal, Quebec H2Y 3Y4 (CA)
(72) Inventor: King, Jonathan, Thetford, Norfolk IP25 7HU (GB); Kean, Peter, Ivybridge, Devon PL21 0SY (GB); Cordina, Kevin, Whittle Le Woods, Lancashire PR6 7HJ (GB)
(74) Representative: Parkinson, Neil Scott

(57) **Abstract**

An intermediate optical amplifier stage (11) of an optical amplifier having cascaded amplifier stages (10,11,12) includes an optical circulator (18) having a first port (18a) forwardly coupled with a second port (18b) which is forwardly coupled with a third port (18c), wherein the second port is optically coupled with an orthogonal polarisation state converting reflector (16) via a length of optically pumped optically amplifying optical fibre (13). The orthogonal polarisation state converting reflector may be constituted by the series combination of a collimating lens (16a), a Faraday rotator (16b) that provides a π/4 plane of polarisation rotation in respect of a single transit of light through the rotator, and a mirror. An alternative form (26) of polarisation state converting reflector is constituted by a loop mirror having a polarisation beam-splitter/combiner (26a) having first and second ports optically coupled with third and fourth ports via an optical coupling region, wherein the third and fourth ports are optically coupled via a length of polarisation state maintaining optical waveguide incorporating a polarisation state conversion device (26c) that converts to the orthogonal polarisation state the polarisation state of light launched into it from either direction. The polarisation state conversion device may be constituted by an optical fibre splice formed between two pieces of polarisation maintaining fibre spliced together with the fast axis one fibre aligned with the slow axis of the other.

## Description

### BACKGROUND TO THE INVENTION

It is often convenient to perform optical amplification at a particular locality in two or more optically cascaded stages. This is typically because a consideration liable to be dominant at the input to the cascade is low noise generation, and this generally requires relatively high population inversion in the amplifying medium whereas, at the output end of the cascade, high output power is associated with relatively low population inversion. Accordingly, when optical amplification is performed in two or more cascaded stages at a locality, the different stages are typically organised to function under different operating conditions according to their particular positions in the cascade.

As the bit rates of optical transmission systems are increased, for instance to bit rates in excess of 10Gb/s, so dispersion effects in the transmission path have to be managed ever more tightly, with the result that residual dispersion effects within optical amplifiers included with the system come to assume greater significance. Such effects are liable to be of greater magnitude in the case of amplifiers employing particularly long lengths of optically amplifying fibre, such as are typically required in the case of erbium doped fibre that is required to provide amplification in the 1570nm to 1600nm waveband (L-band).

### SUMMARY OF THE INVENTION

An object of the present invention is to provide a construction of optical amplifier stage capable of exhibiting minimal polarisation mode dispersion and polarisation dependent loss.

According to the present invention, there is provided an optical amplifier stage that includes an optical circulator having a first port forwardly coupled with a second port which is forwardly coupled with a third port, wherein the second port is optically coupled with an orthogonal polarisation state converting reflector via a length of optically pumped optically amplifying optical fibre.

One form that the orthogonal polarisation state converting reflector can take is a planar mirror faced with a Faraday rotator that provides a π/4 plane of polarisation rotation in respect of a single transit of light through the rotator. Another form is that of a modified form of optical loop mirror, details of which will be described later.

Other features and advantages of the invention will be readily apparent from the following description of preferred embodiments of the invention, from the drawings and from the claims.

### BRIEF DESCRIPTION OF THE DRAWINGS

Figure 1 schematically depicts a three-stage optical amplifier whose middle stage is an optical amplifier stage embodying the invention in a preferred form, and
Figure 2 schematically depicts a three-stage optical amplifier whose middle stage is an optical amplifier stage embodying the invention in an alternative preferred form.

### DETAILED DESCRIPTION OF PREFERRED EMBODIMENTS

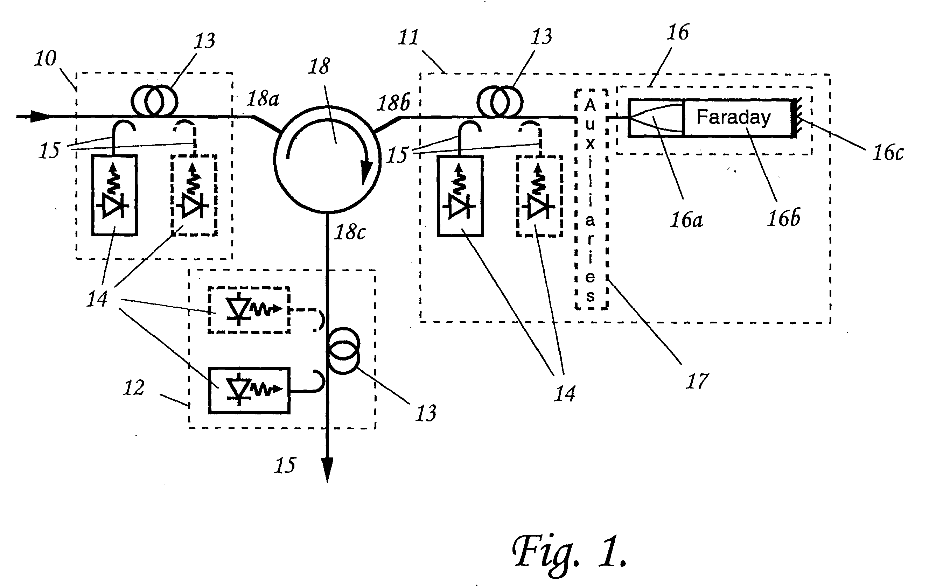

Referring to Figure 1, a three-stage optical amplifier has a pre-amplifier stage indicated generally at 10, an intermediate amplifier stage, indicated generally at 11, which embodies the invention in a preferred form, and a power output amplifier stage indicated generally at 12. Each of these three stages includes a length 13 of optically amplifying optical fibre, typically erbium doped single mode optical fibre, and at least one optical pump 14, typically a diode laser pump, whose output is coupled into the amplifying fibre by means of a wavelength multiplexing coupler 15. In the case of a pre-amplifier stage 10 that is unidirectionally pumped, it is generally preferred to employ co-directional pumping, and so the pump connected for counter-directional pumping has been depicted in broken outline. In the case of a power output stage 12, the pump connected for co-directional pumping has been depicted in broken outline because, if this stage is unidirectionally pumped, it is generally preferred to employ counter-directional pumping. The intermediate stage additionally includes an orthogonal polarisation state converting reflector, indicated generally at 16, and may optionally include one or more auxiliary (gainless) items indicated generally in broken outline at 17. Examples of active forms of auxiliary components that may usefully be incorporated into this part of the amplifier include gain-shaping filters and variable optical attenuators for system payload adjustment. The three amplifier stages 10, 11, and 12, are optically coupled in cascade by means of a polarisation-state-insensitive circulator 18 having a port 18a forwardly coupled with a port 18b, which in its turn is forwardly coupled with a port 18c.

The orthogonal polarisation state converting reflector 16 of Figure 1 consists of a collimating lens 16a, typically a graded index lens, a Faraday rotator 16b providing a π/4 plane of polarisation rotation in respect of a single transit of light through the rotator, and a plane mirror 16c oriented to reflect light launched into the lens 16a from the amplifier fibre 13 of amplifier stage 11 back into that fibre.

Even in the absence of the Faraday rotator 16b, the amplifier stage 11 would possess the advantage that, in this amplifier stage, light is caused to make a double transit through its amplifier fibre 13, thereby effecting a cost saving in the amount of amplifier required for this stage. In the presence of the Faraday rotator 18b, there are the additional and potentially more significant advantages that this rotator operates to provide substantial cancellation of any polarisation mode dispersion, and any polarisation dependent loss, afforded to light making a single transit through its amplifier fibre 13 and any auxiliary components 17. Thus, if there is any polarisation mode dispersion, then light of any arbitrary state of polarisation (SOP) launched into the fibre 13 from the circulator 16 will be resolved into two principal components of amplitudes A₁ and A₂ with orthogonal SOPs that each propagates with a single transit time, respectively τ₁ and τ₂, to emerge into the orthogonal polarisation state converting reflector 16 with respective orthogonally related SOPs P₃ and P₄. The amplifier fibre 13 will typically exhibit different orientations of birefringence at different positions along its length, and so, in general, the SOPs P₃ and P₄ will not be aligned with the SOPs P₁ and P₂. The component of initial amplitude A₁ will be launched, after a time τ₁ with the SOP P₃ into the reflector 16. If the transit time for light to be reflected in this reflector 16 is τᵣ, then this component will be relaunched into amplifier fibre 13 after time (τ₁ + τᵣ) with the SOP P₄. The transit time for this component of light making its second passage through the amplifier fibre is τ₂, and so the total transit time for this component to make its return to the circulator 18 is (τ₁ + τᵣ + τ₂). Similarly, the total transit time for the component having an initial amplitude A₂ to make its return to the circulator 18 is (τ₂ + τᵣ + τ₁). Following the same reasoning, it is evident that if, in comparison with the component of initial amplitude A₂, the component of initial amplitude A₁ is less highly amplified by a certain proportion in its forward (first) transit through the amplifier fibre 13, then this component will be more highly amplified than the other component, and by the same proportion, when the two components make their return transit through that fibre. Thus it is seen that any polarisation mode dispersion, and any polarisation dependent loss, afforded to light making a forward transit through the amplifier fibre 13, are both cancelled by the light making the return transit.

The inclusion of any auxiliary elements 17 within this intermediate amplifier stage 11, rather than elsewhere in the amplifier, means that any polarisation mode dispersion and polarisation dependent loss afforded by such elements to a single transit of light therethrough are similarly both cancelled.

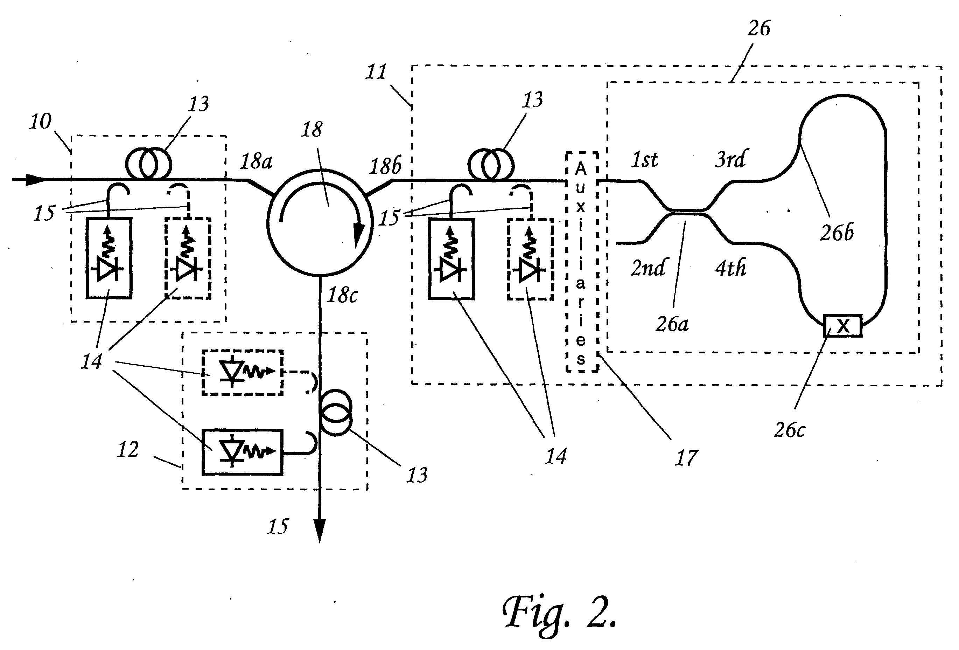

Figure 2 schematically depicts a three-stage amplifier that employs all the same components as the amplifier of Figure 1 except for its orthogonal polarisation state converting reflector 16, the place of which is taken, in the amplifier of Figure 2, by a orthogonal polarisation state converting reflector 26. The orthogonal polarisation state converting reflector 26 does not require the use of any Faraday rotator element, neither does it require the use of expanded beam optics: it is a modified form of Sagnac loop mirror. The conventional form of Sagnac mirror has a 3dB beam-splitter/combiner having first and second ports optically coupled with third and fourth ports via an optical coupling region. The third and fourth ports of this 3dB beamsplitter/combiner are optically coupled by a length of polarisation state maintaining optical fibre waveguide. When light is launched into the first port of the coupler, its coupling region divides that light equally between the third and fourth ports. The light emerging from the coupling region by way of the third port leads by π/2 that emerging from the fourth port because the former is the 'straight through' pathway through the coupling region, and the latter is the 'cross-over' pathway. If the loop that is formed by the fibre and the coupler is at rest, then the optical path length clockwise round the loop is exactly equal to that counter-clockwise round the loop. Therefore, when the clockwise and counter-clockwise components return through the 3dB coupler's coupling region, they produce destructive interference at the second port, and constructive interference at first. (The reason for employing polarisation state maintaining waveguide for fibre connecting the third port to the fourth is to ensure that the returning components do not re-enter the coupling region with different polarisation states, as this would degrade the interference condition.) Thus, neglecting the effects of extraneous coupling losses and absorption losses, the device behaves as a perfect mirror that returns any light launched into it by either of its free ports (i.e. the first and second ports) by way of the same port. If however the loop is not stationary, but is rotating either clockwise or counter-clockwise then the Sagnac effect produces a difference in optical path length between the two counterpropagating components of light propagating in the fibre loop. Accordingly the phase relationship between these two components at their return to the coupling region is disturbed, and hence a proportion of the retuming light is emitted by way of the other port, the value of this proportion being determined by the rate of rotation of the loop. For the purposes of forming the orthogonal polarisation state converting reflector 26, the place of the 3dB beam-splitter/combiner is taken by a polarisation beam-splitter/combiner 26a whose principal polarisation states are aligned with those of the loop of polarisation state maintaining fibre 26b that optically couples the third and fourth ports of the coupler 26a. (Such a polarisation beam-splitter/combiner can for instance be made by a modification of the method described in the specification of United States Patent No. 4,801,185. That specification teaches a construction method in which each of each of two polarisation state maintaining fibres a stub length of circularly symmetric fibre is spliced in between two portions of the polarisation state maintaining fibre, and then forming the coupling region of the polarisation beam-splitter/combiner in the stub lengths. However, in this instance the maintenance of polarisation state is a requirement only on the loop side of the coupling region, and so the polarisation beam splitter/combiner 26a can be made from two fibres each composed of a length of circularly symmetric fibre spliced to a length of polarisation state maintaining fibre, and in which the coupling region is formed in the circularly symmetric regions of the two fibres adjacent their splices.) If this was the only change to the loop mirror then the two components of light propagating in opposite directions round the loop would be orthogonally polarised in their passage through the modulator, but a polarisation state conversion device 26c is additionally included in the loop. This polarisation state conversion device 26c is a device having the property that it converts to the orthogonal polarisation state the polarisation state of light launched into it from either direction. Accordingly, the two components of light propagating in opposite directions round the loop 26b are caused to return to the coupling region of the polarisation beam-splitter/combiner 26a with polarisation states that are orthogonal to those with which they initially emerged from that coupling region. This means that in respect of light launched into the polarisation beam-splitter/combiner 26a by way of its first port, the two counter-rotating components are recombined by the coupling region to emerge once again by way of the first port. The loop path contains no non-reciprocal elements, and so the phase relationship between the two recombining components is the same as that pertaining when they were initially created by the coupling region. This in turn means that the polarisation state of the light emerging from the first port of the polarisation beam-splitter/combiner 26a is orthogonally related to the polarisation state with which that light was initially launched into that first port.

Conveniently, the polarisation state conversion device 26c may be constructed in the polarisation maintaining optical fibre waveguide 26b by cleaving it at some intermediate point in its length, and then fusion-splicing the cleaved ends after having first rotated one end by π/4 relative to the other so that its fast axis is aligned with the slow axis of the other.

Although the amplifiers of Figures 1 and 2 have employed only one intermediate stage amplifier operating in reflex mode and incorporating, it should be understood that there can be circumstances in which it will be desired to use more than one of such intermediate stage amplifiers.

## Claims

1. An optical amplifier stage that includes an optical circulator having a first port forwardly coupled with a second port which is forwardly coupled with a third port, wherein the second port is optically coupled with an orthogonal polarisation state converting reflector via a length of optically pumped optically amplifying optical fibre.

2. An optical amplifier stage as claimed in claim 1, wherein the orthogonal polarisation state converting reflector is constituted by the series combination of a collimating lens, a Faraday rotator that provides a π/4 plane of polarisation rotation in respect of a single transit of light through the rotator, and a mirror.

3. An optical amplifier stage as claimed in claim 1, wherein the orthogonal polarisation state converting reflector is constituted by a loop mirror.

4. An optical amplifier stage as claimed in claim 3, wherein the loop mirror is constituted by a polarisation beam-splitter/combiner having first and second ports optically coupled with third and fourth ports via an optical coupling region, wherein the third and fourth ports are optically coupled via a length of polarisation state maintaining optical waveguide incorporating a polarisation state conversion device that converts to the orthogonal polarisation state the polarisation state of light launched into it from either direction.

5. An optical amplifier stage as claimed in claim 4, wherein the length of polarisation maintaining optical waveguide that optically couples the third and fourth ports of the polarisation beam-splitter/combiner is constituted at least in part by two portions of polarisation maintaining optical fibre having fast and slow axes, which portions are optically coupled by a splice in which the fast axis of one portion is aligned with the slow axis of the other portion so that said spice constitutes said polarisation state conversion device.

6. An optical amplifier having an optical concatenation of optical amplifier stages, which concatenation includes, at an intermediate position in the concatenation, at least one amplifier stage as claimed in any of claims 1 to 5.

7. An optical transmission system having an optical amplifier as claimed in claim 6.
